# EUROPÀISCHE PATENTSCHRIFT

(11) **EP 1 557 766 B1**
(45) Veröffentlichungstag und Bekanntmachung des Hinweises auf die Patenterteilung: **31.12.2014**
(21) Anmeldenummer: 04027793.1
(22) Anmeldetag: 23.11.2004
(51) Int. Cl.: G06F 3/023

(54) **Kommunikationsmodul**
Communication module
Module de communication

(30) Priorität: 20.01.2004 DE 102004002917
(43) Veröffentlichungstag der Anmeldung: 27.07.2005
(73) Patentinhaber: Fujitsu Technology Solutions Intellectual Property GmbH, 80807 München (DE)
(72) Erfinder: Höschele, Ernst, 82178 Puchheim (DE); Kastl, Peter, 86529 Schrobenhausen (DE); Ahn, Georg, 86179 Augsburg (DE); Riedisser, Jochen, 86199 Augsburg (DE)
(74) Vertreter: Epping - Hermann - Fischer

(56) Entgegenhaltungen:
- EP-A- 0 802 465
- US-A1- 5 818 428

## Beschreibung

Die vorliegende Erfindung betrifft ein Kommunikationsmodul für ein Rechnersystem zum bidirektionalen Datenaustausch.

Kommunikationsmodule zum unidirektionalen Datenaustausch sind vielfach bekannt als Statusanzeigen, beispielsweise für Rechnersysteme, Notebooks, Pocket-PCs, Mobiltelefone oder eine Vielzahl anderer Geräte, die beim Betrieb der Geräte zum Beispiel einen Batteriestatus oder eine Empfangsstärke anzeigen. Bei den heute üblicherweise eingesetzten Statusanzeigen werden häufig Leuchtdioden verwendet, um einen Status zu kennzeichnen, insbesondere zur Kennzeichnung, ob ein Gerät einoder ausgeschaltet ist. So kann eine rote Leuchtdiode zum Beispiel einen Standby-Modus und eine grüne Leuchtdiode einen Betriebsmodus anzeigen.

Die heutigen Statusanzeigen zeichnen sich dadurch aus, dass das Gerät, in dem die Statusanzeige betrieben wird, Systemdaten des Gerätes zur Anzeige eines Status an die Statusanzeige weitergibt.

Statusanzeigen, die eine Anzeigeeinheit, beispielsweise ein Display, aufweisen, sind in der Lage, alphanumerische als auch graphische Daten anzuzeigen. Eine Übertragung von Systemdaten zur Anzeige auf dem Display erfolgt in der Regel in Echtzeit, so dass die Daten von zumindest einem Prozessor des Gerätes bzw. Rechnersystems verarbeitet und an das Display prozessiert werden müssen. Somit ist dieser Prozessor neben seinen Aufgaben bzgl. der Datenverarbeitung mit der Handhabung des Benutzerinterfaces, hier der Anzeigeeinheit, belastet. Insbesondere intelligente Statusanzeigen führen zu einer hohen Systemlast des Rechnersystems.

Bisherige Statusanzeigen werden somit lediglich zur Anzeige von vordefinierten Systeminformationen eingesetzt. Es besteht keine Möglichkeit, diese als Eingabegeräte zu verwenden, die , eine aktive Konfiguration und eine zu einem beliebigen Zeitpunkt ausführbare Anzeige der Systemparameter durch einen Benutzer erlauben.

Aus der US 5,818,428 ist eine Steuereinheit mit einer benutzerkonfigurierbarer Schnittstelle zur Nutzung mit Hausgerät und ähnlichen Anwendungsgeräten bekannt. Die Schnittstelle ist direkt mit einem Mikrocontroller zur Steuerung des Geräts verbunden.

Aus der EP 0 802 465 A2 ist ein elektrisches Hausgerät bekannt, das über einen Bus zur Hausautomation mit anderen Hausgeräten verbunden werden kann. Das Hausgerät weist eine Schnittstelle zum Anschluss eines zentralen Steuerrechners auf, über den die angeschlossenen Hausgeräte gesteuert werden können.

Die Aufgabe der vorliegenden Erfindung ist es, die bekannten Statusanzeigen derart weiterzuentwickeln, dass ein bidirektionaler Datenaustausch zwischen der Statusanzeige und dem Rechnersystem ermöglicht ist, wobei die Systemlast des Rechnersystems nicht wesentlich erhöht wird.

Diese Aufgabe wird erfindungsgemäß durch die Merkmale des Patentanspruchs 1 gelöst. Weitere Ausführungsformen der Erfindung sind in den abhängigen Ansprüche spezifiziert.

Dabei ist ein Kommunikationsmodul vorzusehen, welches in einem Rechnersystem zum bidirektionalen Datenaustausch integriert ist. Das Kommunikationsmodul weist eine Datenschnittstelle und eine Benutzerschnittstelle auf, wobei die Benutzerschnittstelle eine Anzeigeeinheit und ein Bedienfeld umfasst. Weiterhin ist eine Steuereinheit vorgesehen, die mit der Benutzerschnittstelle und der Datenschnittstelle zur Übermittlung von Daten von und zum Rechnersystem verbunden ist. Ein in dem Kommunikationsmodul integrierter Speicher ist über ein Businterface mit der Steuereinheit verbunden.

Zur Darstellung von Statusinformationen, wie beispielsweise Batterieladezustand oder Betriebsstatus des Rechnersystems, verfügt die Anzeigeeinheit vorteilhafterweise über vordefinierte Anzeigefelder. Diese Anzeigefelder werden automatisch von im Rechnersystem integrierten Hardware-Komponenten aktualisiert. Im Anzeigefeld können zum einen eine Auswahl üblicherweise am Markt verfügbarer und bekannter Symbole integriert sein, deren Ansteuerung direkt über Leitungen, die mit der Anzeigeeinheit verbunden sind, erfolgt. Zur Darstellung kundenspezifisch definierter Symbole auf der Anzeigeeinheit, die vorzugsweise im Speicher abgelegt und von einem Benutzer über Software auswählbar sind, weist die Steuereinheit Steuerleitungen auf, über die ein von den Komponenten generiertes Steuersignal zur Ansteuerung der Anzeigeeinheit übertragbar ist. Die Symbole sind durch den Hersteller der Anzeigeeinheit somit vorkonfiguriert und zeigen beispielsweise einen Status bezüglich eines Zugriffs auf eine Festplatte, eines Systemfehlers, eines Temperaturzustands, eines Batteriestatus oder einer aktiven LAN-Verbindung an.

Mittels des im Kommunikationsmodul integrierten Bedienfeldes ist es einem Benutzer ermöglicht, Systeminformationen weiterer Zustände des Rechnersystems aktiv abzurufen. Weiterhin können Konfigurationen des Rechnersystems, beispielsweise die Veränderung von Systemparametern oder die Auswahl eines Bootmediums vorgenommen werden. Hierzu weist die Steuereinheit einen Unterbrechungsleitung auf, die mit der Datenschnittstelle verbunden ist und über die ein durch die Steuereinheit erzeugtes Unterbrechungssignal an die Datenschnittstelle anlegbar ist. Ein entsprechendes Unterbrechungssignal führt zum einen zur Anzeige von Status- und/oder Konfigurationsinformationen der im Rechnersystem integrierten Hard- und Software-Komponenten. Zum anderen führt ein entsprechendes Unterbrechungssignal mit jeweiligen Eingabeparametern zu einer Bearbeitung durch die im Rechnersystem beispielsweise auf einem Mainboard angeordneten Prozessoren, die eine gewünschte Konfiguration der Hard- und Software-Komponenten des Rechnersystems vornehmen. Aufgrund dieses Unterbrechungssignals, eines sogenannten asynchronen Interrupts, werden die gewünschten Informationen aktiv vom Kommunikationsmodul abgerufen. Neben diesem aktiven Abrufen von Informationen ist es einem Benutzer ebenso ermöglicht, Systemverwaltungsfunktionen, wie beispielsweise die Konfiguration von Systemparametern oder das Absetzen von Testsequenzen, vom Kommunikationsmodul aus auszuführen, so dass die Systemlast niedrig gehalten werden kann.

Das Bedienfeld erlaubt weiterhin eine benutzerspezifische Konfiguration der Anzeigeeinheit zur graphischen und alphanumerischen Darstellung bzw. Anzeige der Informationen. So ist die Konfiguration und Anordnung beliebiger Symbole und alphanumerischer Daten ebenso denkbar wie die Bestimmung der Reihenfolge und Festlegung der Zeitintervalle darzustellender oder abzurufender Informationen.

Statusanzeigen, wie z. B. der momentane Batteriestand, können auch in stromlosen Zustand des Rechnersystems, zum Beispiel in einem Standby-Modus, angezeigt werden.

Ist die Anzeigeeinheit eine programmierbare, nicht-flüchtige Anzeige, beispielsweise eine ferroelektrischen Flüssigkeitskristallanzeige, hat diese die Eigenschaft, dass sie ähnlich wie ein LCD-Display unter Spannungsversorgung verschiedene veränderbare Grafiken anzeigen kann und im spannungslosen Zustand die zuletzt angezeigte Grafik beibehält.

Günstigerweise sind alle abgerufenen Informationen bzw. vorgenommenen Systemverwaltungsaktionen in dem mit der Steuereinheit über ein Businterface verbundenen Speicher abgelegt. Somit können die Daten im Speicher jederzeit abgerufen und auf der Anzeigeeinheit dargestellt werden, so dass beispielsweise zeitlich zurückliegend vorgenommene Konfigurationen sowohl des Rechnersystems als auch des Kommunikationsmoduls, Testergebnisse oder Systemparameter reproduzierbar sind. Weiterhin kann der Speicher frei beschreibbare Bereiche aufweisen, die beispielsweise Test- oder Wartungsprogramme oder hersteller- oder benutzerspezifische Informationen zur Ausführung bzw. Anzeige vorhalten.

Weitere Einzelheiten und Ausgestaltungen der Erfindung sind in den Unteransprüchen angegeben.

Die Erfindung wird nachfolgend an einem Ausführungsbeispiel anhand der Figuren näher erläutert.

In der Figur zeigt:

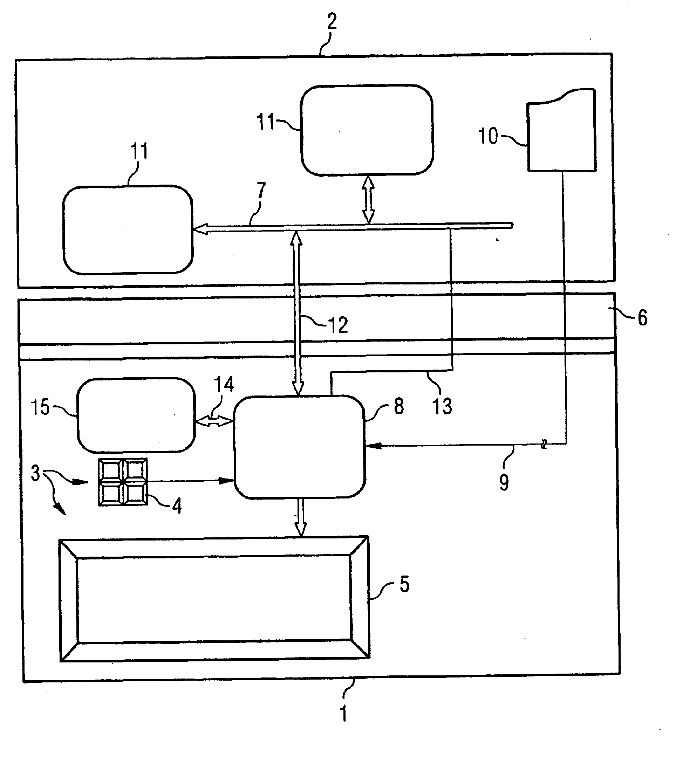

- Figur 1: eine schematische Darstellung eines erfindungsgemäßen Kommunikationsmoduls.

In der Figur 1 ist ein erfindungsgemäßes Kommunikationsmodul 1 und seine Anbindung an eine Hauptplatine 2 eines hier nicht dargestellten Rechnersystems schematisch dargestellt. Das Kommunikationsmodul 1 weist eine Benutzerschnittstelle 3 auf, die aus einem Bedienfeld 4 und einer Anzeigeeinheit 5 gebildet ist. Zur Kontaktierung mit der Hauptplatine 2 des Rechnersystems weist das Kommunikationsmodul 1 eine Datenschnittstelle 6 auf. Die Datenschnittstelle 6 ist als eine Inter-Integrated-Circuit-Bus-Schnittstelle (I2C) ausgebildet und kontaktiert eine Datenschnittstelle bzw. einen System-Management-Bus (SMBus) 7 des Rechnersystems. Zur Verbindung kann ein hier nicht sichtbares am Kommunikationsmodul 1 angeordnetes flexibles Kabel mit einem Stecker versehen sein, der einen entsprechenden Stecker an der Hauptplatine 2 kontaktiert.

Das Kommunikationsmodul 1 umfasst weiterhin eine Steuereinheit 8, die mit der Benutzerschnittstelle 3 und der Datenschnittstelle 6 des Kommunikationsmoduls 1 verbunden ist und die einen bidirektionalen Datenfluss vom und zum Rechnersystem steuert. Zumindest über eine mit der Steuereinheit 8 verbundene und über die Datenschnittstelle 6 des Kommunikationsmoduls 1 geführte Steuerleitung 9 ist ein Status von Komponenten 10 des Rechnersystems, beispielsweise Ladezustand einer Batterie oder eine Betriebstemperatur von Prozessoren, mittels Steuersignale durch das Rechnersystem übermittelbar und ein Systemzustand auf der Anzeigeeinheit 5 darstellbar. Hierzu weist die Anzeigeeinheit 5 hier nicht gezeigte, durch einen Hersteller der Anzeigeeinheit 5 vorkonfigurierte und durch einen Benutzer softwaremäßig auswählbare Symbole auf. Eine Aktualisierung dieser Anzeigefelder erfolgt automatisch, da bei einer entsprechenden Statusänderung der Komponenten 10 eine Ansteuerung der Steuereinheit 8 und somit eine Änderung der Symbole der Anzeigeeinheit 5 durch das Rechnersystem erfolgt. Eine Ansteuerung der Anzeigeeinheit 5 zur Anzeige bekannter Symbole, die in der Anzeigeeinheit 5 integriert und durch den Benutzer nicht auswählbar sind, erfolgt direkt über hier nicht gezeigte Verbindungen der Anzeigeeinheit 5 mit den Komponenten 10.

Über das Bedienfeld 4 des Kommunikationsmoduls 1 sind weitere Status- und/oder Konfigurationsinformationen weiterer im Rechnersystem integrierter Hard- und Software-Komponenten 11 abrufbar, die über Datenleitungen 12 der Datenschnittstelle 6 übertragen werden. Bei einer entsprechenden Eingabe durch einen Benutzer zum Abruf von Informationen führt die Steuereinheit 8 dem Datenbus 7 des Rechnersystems ein Unterbrechungssignal über eine an der Steuereinheit 8 angeordnete und über die Datenschnittstelle 6 des Kommunikationsmoduls 1 geführte Unterbrechungsleitung 13 zu, wobei die Steuereinheit 8 ein Auslesen bzw. Ermitteln der gewünschten Informationen vornimmt. Über das Bedienfeld 3 kann der Benutzer auch Systemeingaben, beispielsweise eine Konfigurationen von Systemparametern der Hard- und Software-Komponenten 11, initiieren, die von der Steuereinheit 8 ausgeführt werden. Der bidirektionale Datenaustausch erfolgt jeweils über die Datenleitungen 12. Weiterhin ist eine benutzerspezifische Konfiguration der Anzeigeeinheit 5 zur Darstellung der gewünschten Informationen ermöglicht.

Über ein Businterface 14 ist die Steuereinheit 8 mit einem Speicher 15 verbunden, in dem alle durch die Steuereinheit 8 abgerufenen Informationen sowie Konfigurationsparameter abgelegt sind. In einem Speicherbereich des Speichers 15 sind weiterhin benutzerspezifische Daten, beispielsweise das LOGO einer Firma oder der Rechnername, ablegbar, die von einem Benutzer beliebig abrufbar sind. Im Speicher 15 abgelegte Testroutinen sind über das Bedienfeld 3 durch den Benutzer zur Durchführung spezifischer Tests aktivierbar. Im Fehlerfall können im Speicher 15 abgelegte Wartungsprogramme zur Fehlereingrenzung ausgeführt werden.

Im folgenden ist ein Auszug möglicher Gruppen von Systemverwaltungsfunktionen aufgeführt, die mittels des Konfigurationsmoduls 1 ausführbar und auf der Anzeigeeinheit 5 darstellbar sind:
- Abruf von Hardware-Parametern (MAC-Adresse, Computername, Assetnummern, etc.),
- Abruf von Konfigurations-Parametern (IP-Adresse, LAN-Speed, etc.)
- Abruf von Status-Parametern (Temperatur, Lüftergeschwindigkeit, Plattenzugriffe, Leistungsaufnahme, Fehlercodes, Stromversorgung etc.),
- Abruf und/oder Laden von benutzerspezifischen Parametern (Kundenspezifische Daten, Termine, Outlook-Nachrichten),
- Abruf von Testergebnisseen (Selftest, spezielle Testroutinen etc.),
- Konfiguration des Kommunikationsmoduls ausgehend vom Rechnersystem,
- Konfiguration der Anzeigeeinheit zur Darstellung aller abgerufenen und/oder gespeicherten Informationen,
- Konfiguration von Systemparametern des Rechnersystems,
- Initiieren von Testroutinen, Wartungsprogrammen etc. und
- Auswahl zu verwendender Medien (Bootmedium etc.)

Das vorgeschlagene Kommunikationsmodul erlaubt einen bidirektionalen Datenaustausch mit einem Rechnersystem, wobei die Rechenleistung für abzurufende Systeminformationen bzw. vorzunehmende Konfigurationen durch die im Kommunikationsmodul integrierte Steuereinheit erbracht wird. Die Systemlast der auf der Hauptplatine angeordneten Prozessoren wird zur Ausführung dieser Aufgaben somit nicht wesentlich erhöht. Systemverwaltungsfunktionen sind ohne die üblicherweise zu benutzenden Komponenten wie Monitor oder Tastatur ausführbar.

Es ist sowohl ein Backup als auch ein Restore gespeicherter Informationen ermöglicht.

### Bezugszeichenliste

- 1: Kommunikationsmodul
- 2: Hauptplatine
- 3: Benutzerschnittstelle
- 4: Bedienfeld
- 5: Anzeigeeinheit
- 6: Datenschnittstelle
- 7: Datenbus
- 8: Steuereinheit
- 9: Steuerleitung
- 10: Komponenten
- 11: Weitere Komponenten
- 12: Datenleitungen
- 13: Unterbrechungsleitung
- 14: Businterface
- 15: Speicher

## Patentansprüche

1. Kommunikationsmodul (1) für ein Rechnersystem mit einer CPU zum bidirektionalen Datenaustausch, aufweisend:
- eine Datenschnittstelle (6) und eine Benutzerschnittstelle (3), wobei die Benutzerschnittstelle (3) eine Anzeigeeinheit (5) und ein Bedienfeld (4) umfasst,
- eine Steuereinheit (8), die mit der Benutzerschnittstelle (3) und der Datenschnittstelle (6) verbunden ist, zur Übermittlung von Daten von und zu der CPU oder Komponenten (10, 11) des Rechnersystems über einen im Rechnersystem integrierten System-Management-Datenbus (7), und
- einen Speicher (15), der über einen Speicherbus (14) mit der Steuereinheit (8) verbunden ist,
**gekennzeichnet dadurch, dass**
- die Datenschnittstelle (6) auf dem Inter-Integrated-Circuit-Bussystem basiert und mit dem im Rechnersystem integrierten System-Management-Datenbus (7) verbunden ist,
- das Kommunikationsmodul (1) dazu eingerichtet ist, durch Eingaben am Bedienfeld (4) durch einen Benutzer Statusinformation der Komponenten (11) abzufragen und Konfigurationsparameter an die Komponenten (10, 11) des Rechnersystems zu übertragen, und die Rechenleistung für das Abfragen von Statusinformationen bzw. ein Vornehmen einer Konfigurationen durch die im Kommunikationsmodul (1) integrierte Steuereinheit (8) zu erbringen, so dass die Systemlast der CPU zur Ausführung dieser Aufgaben nicht wesentlich erhöht wird,
- die über das Bedienfeld (4) vorgenommene Konfiguration sowie die über das Bedienfeld(4) abgerufene Statusinformationen als Konfigurationsparameter und Statusinformation im Speicher (15) abgelegt sind.

2. Kommunikationsmodul (1) nach Anspruch 1,
**dadurch gekennzeichnet, dass**
die Steuereinheit (8) zumindest eine Steuerleitung (9) aufweist, über die automatisch ein Steuersignal zur Anzeige
des Betriebsstatus der Komponenten (10) des Rechnersystems auf der Anzeigeeinheit (5) bereitstellbar ist.

3. Kommunikationsmodul (1) nach Anspruch 1,
**dadurch gekennzeichnet, dass**
die Steuereinheit (8) zumindest eine Unterbrechungsleitung (13) aufweist, über die ein Unterbrechungssignal dem Rechnersystem über die Datenschnittstelle (6) zuführbar ist.

4. Kommunikationsmodul (1) nach einem der Ansprüche 1 bis 3,
**dadurch gekennzeichnet, dass**
die Steuereinheit (8) dem Speicher (15) die Konfigurationsparameter und Statusinformationen über das Businterface (14) übermittelt.

5. Kommunikationsmodul (1) nach Anspruch 1,
**dadurch gekennzeichnet, dass**
die Datenschnittstelle (6) den System-Management-Datenbus (7) des Rechnersystems kontaktiert und ein bidirektionaler Datenaustausch mit dem Kommunikationsmodul (1) über Datenleitungen (12) der Datenschnittstelle (6) erfolgt.

6. Kommunikationsmodul (1) nach einem der Ansprüche 1 bis 5,
**dadurch gekennzeichnet, dass**
die Anzeigeeinheit (5) vorkonfigurierte graphische Symbole aufweist, über die der Betriebsstatus der Komponenten (10) des Rechnersystems anzeigbar ist.

7. Kommunikationsmodul (1) nach einem der Ansprüche 1 bis 6,
**dadurch gekennzeichnet, dass**
die Anzeigeeinheit (5) eine ferroelektrische Flüssigkeitskristallanzeige ist.

8. Kommunikationsmodul (1) nach einem der Ansprüche 1 bis 6,
**dadurch gekennzeichnet, dass**
die Anzeigeeinheit (5) ein LCD-Display ist.

9. Kommunikationsmodul (1) nach einem der Ansprüche 1 bis 6,
**dadurch gekennzeichnet, dass**
die Anzeigeeinheit (5) eine Hintergrundbeleuchtung aufweist.

10. Kommunikationsmodul (1) nach einem der Ansprüche 1 bis 9,
**dadurch gekennzeichnet, dass**
abgerufene Systeminformationen und/oder gespeicherte Daten auf der Anzeigeeinheit (5) anzeigbar sind.

11. Kommunikationsmodul (1) nach einem der Ansprüche 1 bis 10,
**dadurch gekennzeichnet, dass**
das Bedienfeld (4) in der Anzeigeeinheit (5) integriert ist.

12. Kommunikationsmodul (1) nach einem der Ansprüche 1 bis 11,
**dadurch gekennzeichnet, dass**
das Kommunikationsmodul (1) auf einer Platine des Rechnersystems untergebracht ist, die separat zu der die CPU und den System-Management-Datenbus (7) des Rechnersystems enthaltenden Hauptplatine (2) angeordnet ist.

## Claims

1. Communication module (1) for a computer system with a CPU for bidirectional data interchange, having:
- a data interface (6) and a user interface (3), the user interface (3) comprising a display unit (5) and a control panel (4),
- a control unit (8) which is connected to the user interface (3) and to the data interface (6) for transmitting data from and to the CPU or components (10, 11) of the computer system via a system management data bus (7) integrated in the computer system, and
- a memory (15) which is connected to the control unit (8) via a memory bus (14),
**characterized in that**
- the data interface (6) being based on the inter-integrated circuit bus system and being connected to the system management data bus (7) integrated in the computer system,
- the communication module (1) is set up to query status information relating to the components (11) as a result of inputs on the control panel (4) by a user and to transmit configuration parameters to the components (10, 11) of the computer system, and to provide the computing power for querying status information and carrying out a configuration by the control unit (8) integrated in the communication module (1), with the result that the system load of the CPU for carrying out these tasks is not substantially increased,
- the configuration carried out via the control panel (4) and the status information retrieved via the control panel (4) are stored as configuration parameters and status information in the memory (15).

2. Communication module (1) according to Claim 1,
**characterized in that**
the control unit (8) has at least one control line (9) which can be used to automatically provide a control signal for indicating the operating status of the components (10) of the computer system on the display unit (5).

3. Communication module (1) according to Claim 1,
**characterized in that**
the control unit (8) has at least one interrupt line (13) which can be used to supply an interrupt signal to the computer system via the data interface (6).

4. Communication module (1) according to one of Claims 1 to 3,
**characterized in that**
the control unit (8) transmits the configuration parameters and status information to the memory (15) via the bus interface (14).

5. Communication module (1) according to Claim 1,
**characterized in that**
the data interface (6) makes contact with the system management data bus (7) of the computer system and data are interchanged bidirectionally with the communication module (1) via data lines (12) of the data interface (6).

6. Communication module (1) according to one of Claims 1 to 5,
**characterized in that**
the display unit (5) has preconfigured graphical symbols which can be used to indicate the operating status of the components (10) of the computer system.

7. Communication module (1) according to one of Claims 1 to 6,
**characterized in that**
the display unit (5) is a ferroelectric liquid crystal display.

8. Communication module (1) according to one of Claims 1 to 6,
**characterized in that**
the display unit (5) is an LCD display.

9. Communication module (1) according to one of Claims 1 to 6,
**characterized in that**
the display unit (5) has backlighting.

10. Communication module (1) according to one of Claims 1 to 9,
**characterized in that**
retrieved system information and/or stored data can be displayed on the display unit (5).

11. Communication module (1) according to one of Claims 1 to 10,
**characterized in that**
the control panel (4) is integrated in the display unit (5).

12. Communication module (1) according to one of Claims 1 to 11,
**characterized in that**
the communication module (1) is accommodated on a circuit board of the computer system which is arranged separately from the motherboard (2) containing the CPU and the system management data bus (7) of the computer system.

## Revendications

1. Module de communication (1) pour un système d'ordinateur comprenant une CPU pour l'échange de données bidirectionnel, présentant :
- une interface de données (6) et une interface d'utilisateur (3), l'interface d'utilisateur (3) comprenant une unité d'affichage (5) et un panneau de commande (4),
- une unité de commande (8) qui est reliée avec l'interface d'utilisateur (3) et l'interface de données (6), pour communiquer des données, depuis et vers la CPU ou des composants (10, 11) du système d'ordinateur par le biais d'un bus de données de gestion du système (7) intégré dans le système d'ordinateur, et
- une mémoire (15) qui est reliée avec l'unité de commande (8) par le biais d'un bus de mémoire (14),
**caractérisé en ce que**
- l'interface de données (6) étant basée sur le système de bus inter-circuits intégrés et reliée avec le bus de données de gestion du système (7) intégré dans le système d'ordinateur,
- le module de communication (1) est conçu pour interroger une information d'état des composants (11) par des saisies sur le panneau de commande (4) par un utilisateur et pour transmettre des paramètres de configuration aux composants (10, 11) du système d'ordinateur, et pour fournir la puissance de calcul pour l'interrogation des informations d'état ou pour effectuer une configuration par le biais de l'unité de commande (8) intégrée dans le module de communication (1), de sorte que la charge système de la CPU ne soit pas considérablement augmentée en vue de l'accomplissement de ces tâches,
- la configuration effectuée par le biais du panneau de commande (4) ainsi que les informations d'état interrogées par le biais du panneau de commande (4) sont stockées sous la forme de paramètres de configuration et d'information d'état dans la mémoire (15).

2. Module de communication (1) selon la revendication 1, **caractérisé en ce que** l'unité de commande (8) présente au moins une ligne de commande (9) par le biais de laquelle peut être délivré automatiquement un signal de commande destiné à l'affichage de l'état opérationnel des composants (10) du système d'ordinateur sur l'unité d'affichage (5).

3. Module de communication (1) selon la revendication 1, **caractérisé en ce que** l'unité de commande (8) présente au moins une ligne d'interruption (13) par le biais de laquelle un signal d'interruption peut être acheminé au système d'ordinateur par le biais de l'interface de données (6).

4. Module de communication (1) selon l'une des revendications 1 à 3, **caractérisé en ce que** l'unité de commande (8) communique les paramètres de configuration et les informations d'état à la mémoire (15) par le biais de l'interface de bus (14).

5. Module de communication (1) selon la revendication 1, **caractérisé en ce que** l'interface de données (6) est en contact avec le bus de données de gestion du système (7) du système d'ordinateur et un échange de données bidirectionnel a lieu avec le module de communication (1) par le biais des lignes de données (12) de l'interface de données (6).

6. Module de communication (1) selon l'une des revendications 1 à 5, **caractérisé en ce que** l'unité d'affichage (5) présente des symboles graphiques préconfigurés par le biais desquels peut être affiché l'état opérationnel des composants (10) du système d'ordinateur.

7. Module de communication (1) selon l'une des revendications 1 à 6, **caractérisé en ce que** l'unité d'affichage (5) est un afficheur à cristaux liquides ferroélectrique.

8. Module de communication (1) selon l'une des revendications 1 à 6, **caractérisé en ce que** l'unité d'affichage (5) est un afficheur LCD.

9. Module de communication (1) selon l'une des revendications 1 à 6, **caractérisé en ce que** l'unité d'affichage (5) présente un rétroéclairage.

10. Module de communication (1) selon l'une des revendications 1 à 9, **caractérisé en ce que** les informations de système interrogées et/ou les données mises en mémoire peuvent être affichées sur l'unité d'affichage (5).

11. Module de communication (1) selon l'une des revendications 1 à 10, **caractérisé en ce que** le panneau de commande (4) est intégré dans l'unité d'affichage (5).

12. Module de communication (1) selon l'une des revendications 1 à 11, **caractérisé en ce que** le module de communication (1) est monté sur une platine du système d'ordinateur, laquelle est disposée séparément de la carte-mère (2) contenant la CPU et le bus de données de gestion du système (7) du système d'ordinateur.
